# EUROPÄISCHE PATENTSCHRIFT

(11) **EP 3 473 489 B1**
(45) Veröffentlichungstag und Bekanntmachung des Hinweises auf die Patenterteilung: **16.12.2020**
(21) Anmeldenummer: 18200750.0
(22) Anmeldetag: 16.10.2018
(51) Int. Cl.: B60L 53/80, B60S 5/06, B60L 50/60, B60L 58/21, B60K 1/04

(54) **ELEKTROMOTORISCH ANGETRIEBENES FAHRZEUG**
ELECTRIC MOTOR DRIVEN VEHICLE
VÉHICULE ENTRAÎNÉ PAR UN MOTEUR ÉLECTRIQUE

(30) Priorität: 20.10.2017 DE 102017124534; 07.12.2017 DE 102017129121
(43) Veröffentlichungstag der Anmeldung: 24.04.2019
(73) Patentinhaber: Eberspächer Climate Control Systems GmbH, 73730 Esslingen (DE)
(72) Erfinder: Jensen, Hans, 73265 Dettingen (DE)
(74) Vertreter: Ruttensperger Lachnit Trossin Gomoll

(56) Entgegenhaltungen:
- EP-A1- 2 772 419
- EP-A1- 2 969 640
- EP-A2- 2 053 717
- WO-A1-2014/119049
- DE-A1-102009 014 386
- DE-A1-102009 042 001
- DE-A1-102013 015 637
- FR-A1- 3 039 479
- JP-A- 2016 220 305
- US-A- 5 969 624
- US-A1- 2010 065 344
- US-A1- 2012 299 531
- US-A1- 2013 282 472

## Beschreibung

Die vorliegende Erfindung betrifft ein elektromotorisch betriebenes Fahrzeug. Ein derartiges elektromotorisch betriebenes Fahrzeug kann beispielsweise ein Fahrzeug sein, dass rein elektromotorisch betrieben ist, kann alternativ jedoch auch ein Fahrzeug sein, dessen Antriebseinheit nach Art eines sogenannten PlugIn-Hybridantriebs mit wenigstens einem Elektromotor und einer Brennkraftmaschine aufgebaut ist.

Bei elektromotorisch betriebenen Fahrzeugen besteht grundsätzlich ein Problem darin, dass aufgrund der begrenzten Speicherkapazität der Energiespeicher, also der Fahrzeugbatterien, die Reichweite derartiger Fahrzeuge beschränkt ist. Obgleich die Anzahl an zur Verfügung stehenden Ladestationen zunimmt, nimmt der Ladevorgang eine durch die Nutzer derartiger Fahrzeuge häufig als nicht annehmbar erachtete Zeitdauer in Anspruch. Insbesondere die Notwendigkeit, Energiespeicher bei längeren Fahrten wiederholt aufladen zu müssen und dabei wiederholt die grundsätzlich bereits als zu lang erachtete Ladezeitdauer aufbringen zu müssen, und ein in verschiedenen Regionen nicht ausreichend dichtes Netz von Ladestationen werden als wesentliche gegen die Anschaffung eines elektromotorisch betriebenen Fahrzeugs angeführte Aspekte erachtet.

Ein elektromotorisch angetriebenes Fahrzeug gemäß dem Oberbegriff des Anspruchs 1 ist aus der US 2013/0282472 A1 bekannt.

Aus der EP 2 772 419 A1 ist es bekannt, bei einem elektromotorisch angetriebenen Fahrzeug, das mit einem fahrzeugfesten Energiespeicher ausgestattet ist und zusätzlich mit Austausch-Energiespeichern ausgestattet werden kann, dann, wenn die Austausch-Energiespeicher einen ausreichend hohen Ladezustand aufweisen, zunächst die Austausch-Energiespeicher zu entladen, bevor auf den fahrzeugfesten Energiespeicher zugegriffen wird.

Bestimmte Ladestrategien sind aus der Dokumente WO2014119049, DE102009014386, JP2016220305 bekannt.

Es ist die Aufgabe der vorliegenden Erfindung, ein elektromotorisch angetriebenes Fahrzeug vorzusehen, bei welchem in einfacher Art und Weise die Speicherkapazität für elektrische Energie vergrößert bzw. an einen sich ändernden Bedarf angepasst werden kann.

Erfindungsgemäß wird diese Aufgabe gelöst durch ein elektromotorisch angetriebenes Fahrzeug gemäß Anspruch 1. Dieses umfasst eine Antriebseinheit mit wenigstens einem Elektromotor, wenigstens einen fahrzeugfesten Energiespeicher und eine Ansteuereinheit zur Beeinflussung des Energieflusses zwischen dem wenigstens einen Elektromotor und dem wenigstens einen fahrzeugfesten Energiespeicher, ferner umfassend eine Schnittstelle mit einer Mehrzahl von Anschlussbereichen für jeweils einen Austausch-Energiespeicher, wodurch eine hohe Variabilität in der Anpassung der Speicherkapazität in einem Fahrzeug gewährleistet ist.

Um einen zuverlässigen Austausch elektrischer Energie zwischen einem oder mehreren an die Schnittstelle angeschlossenen Austausch-Energiespeichern und dem wenigstens einen Elektromotor gewährleisten zu können, ist die Ansteuereinheit zur Beeinflussung des Energieflusses zwischen dem wenigstens einen Elektromotor und wenigstens einem an einen Anschlussbereich angeschlossenen Austausch-Energiespeicher ausgebildet.

Zum Gewährleisten einer effizienten Ausnutzung der in Austausch-Energiespeichern gespeicherten Energie ist die Ansteuereinheit dazu ausgebildet, dann, wenn mehrere Austausch-Energiespeicher an die Schnittstelle angeschlossen sind, den Energiefluss zwischen den Austausch-Energiespeichern und dem wenigstens einen Elektromotor derart zu beeinflussen, dass die Austausch-Energiespeicher sequenziell entladen werden.

Ferner ist die Ansteuereinheit dazu ausgebildet, den Energiefluss zwischen dem fahrzeugfesten Energiespeicher sowie den Austausch-Energiespeichern und dem wenigstens einen Elektromotor im Zugbetrieb des Fahrzeugs derart zu beeinflussen, dass zunächst jeder an die Schnittstelle angeschlossene Austausch-Energiespeicher entladen wird und erst dann, wenn jeder an die Schnittstelle angeschlossene Austausch-Energiespeicher nicht mehr zur Versorgung des wenigstens einen Elektromotors genutzt werden kann, auf den fahrzeugfesten Energiespeicher zugegriffen wird.

Weiter ist erfindungsgemäß dass die Ansteuereinheit dazu ausgebildet ist, den Energiefluss zwischen dem wenigstens einen Elektromotor und dem fahrzeugfesten Energiespeicher sowie den Austausch-Energiespeichern im Schubbetrieb des Fahrzeugs derart zu beeinflussen, dass zunächst der fahrzeugfeste Energiespeicher geladen wird, bevor einer oder mehrere Austausch-Energiespeicher geladen werden.

Bei einem erfindungsgemäß aufgebauten elektromotorisch betriebenen Fahrzeug besteht die Möglichkeit, zusätzlich zu dem im Fahrzeug fest verbauten und somit durch einen Nutzer des Fahrzeugs grundsätzlich nicht austauschbaren Energiespeicher einen oder mehrere weitere Energiespeicher im Fahrzeug vorzusehen. Somit wird die Möglichkeit geschaffen, dass dann, wenn längere Fahrten oder Fahrten in Gebiete mit nicht ausreichender Versorgung mit Ladestationen geplant sind, zusätzlich zu dem fest verbauten Energiespeicher, der beispielsweise eine Speicherkapazität aufweisen kann, die für eine Fahrstrecke von 300-500 km ausreichend ist, weitere Speicherkapazität bereitzustellen, um auf diese Art und Weise die Reichweite eines so ausgestatteten Fahrzeugs zu vergrößern bzw. an den erforderlichen Bedarf anpassen zu können.

Für eine effiziente Ausnutzung des in einem Fahrzeug vorhandenen Speicherraums wird vorgeschlagen, dass wenigstens ein Anschlussbereich in einem Laderaum oder/und an einem Heckträger oder/und in einer Dachbox oder/und auf einem Kofferraumdeckel oder/und an einem Anhänger vorgesehen ist.

Für eine stabile Positionierung eines derartigen zusätzlich in einem Fahrzeug vorzusehenden Energiespeichers kann in Zuordnung zu jedem Anschlussbereich eine Energiespeicherfixieranordnung vorgesehen sein. Für eine variable Unterbringung an einem Fahrzeug kann dabei wenigstens eine Energiespeicher-Fixieranordnung in einem Laderaum oder/und an einem Heckträger oder/und in einer Dachbox oder/und auf einem Kofferraumdeckel oder/und an einem Anhänger vorgesehen sein.

Um dem Nutzer eines derart aufgebauten Fahrzeugs die Möglichkeit zu geben, rechtzeitig einen Austausch eines Austausch-Energiespeichers vorzunehmen, wird vorgeschlagen, dass die Ansteuereinheit dazu ausgebildet ist, Information über den Ladezustand jedes an die Schnittstelle angeschlossenen Austausch-Energiespeichers bereitzustellen.

Die Prinzipien der vorliegenden Erfindung können Anwendung finden bei rein elektromotorisch betriebenen Fahrzeugen, können vorteilhafterweise jedoch auch zu einer Vergrößerung der Reichweite beitragen, wenn die Antriebseinheit eine Brennkraftmaschine umfasst.

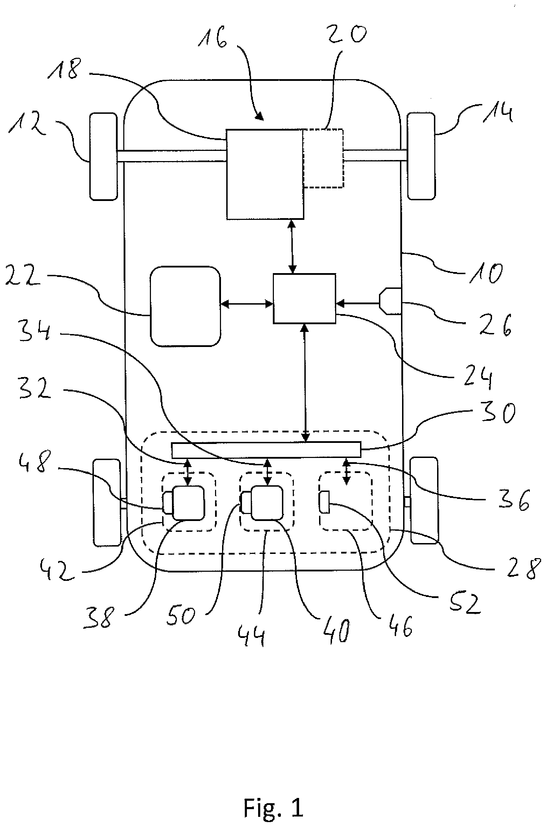

Die Erfindung wird nachfolgend mit Bezug auf die beiliegende Fig. 1 detailliert beschrieben, welche in prinzipartiger Darstellung ein elektromotorisch angetriebenes Fahrzeug zeigt.

Das in Fig. 1 dargestellte elektromotorisch angetriebene Fahrzeug 10 umfasst in Zuordnung zu angetriebenen Rädern 12, 14 eine Antriebseinheit 16. Die Antriebseinheit 16 umfasst wenigstens einen Elektromotor 18 und kann im Falle eines sogenannten PlugIn-Hybridantriebs zusätzlich eine Brennkraftmaschine 20 aufweisen.

In einem im Fahrzeug 10 fest verbauten Energiespeicher 22 wird elektrische Energie gespeichert, aus welcher der wenigstens eine Elektromotor 18 mit elektrischer Energie gespeist wird, um das Fahrzeug 10 anzutreiben. Auch andere in einem Bordnetz des Fahrzeugs 10 vorhandene Verbraucher elektrischer Energie können aus dem Energiespeicher 22 gespeist werden. Eine Ansteuereinheit 24 steuert bzw. regelt den Austausch elektrischer Energie zwischen dem Energiespeicher 22 und dem wenigstens einen Elektromotor 18. Dies betrifft einen Zugzustand, in welchem der wenigstens eine Elektromotor 18 ein Antriebsdrehmoment liefert, um das Fahrzeug 10 anzutreiben und somit mit elektrischer Energie aus dem Energiespeicher 22 gespeist wird. Auch in einem Schubzustand, in welchem der wenigstens eine Elektromotor 18 als Generator arbeiten kann, um elektrische Energie zum Speichern im Energiespeicher 22 bereitzustellen, kann die Ansteuereinheit 24 den Energiefluss zwischen dem wenigstens einen Elektromotor 18 und dem Energiespeicher 22 beeinflussen, also steuern bzw. regeln. Ferner kann zum Aufladen des Energiespeichers 22 die Ansteuereinheit 24 den Energiefluss zwischen einem Ladeanschluss 26, an welchen eine externe Ladestation angeschlossen werden kann, und dem Energiespeicher 22 steuern bzw. regeln bzw. eine Verbindung zwischen dem Ladeanschluss 26 und dem Energiespeicher 22 herstellen.

Es ist darauf hinzuweisen, dass der Energiespeicher 22 eine Mehrzahl von Energiespeichereinheiten umfassen kann, die baulich miteinander verknüpft sein können, grundsätzlich aber auch zur effizienten Ausnutzung des Bauraums an verschiedenen Positionen des Fahrzeugs 10 untergebracht sein können.

Das Fahrzeug 10 umfasst ferner beispielsweise in einem Laderaum 28, wie z.B. Kofferraum in einem Personenkraftfahrzeug, eine Schnittstelle 30 mit einer Mehrzahl von Anschlussbereichen 32, 34, 36. An jeden Anschlussbereich 32, 34, 36 kann ein Austausch-Energiespeicher 38, 40 angeschlossen werden. Zu diesem Zwecke ist im Bereich der Schnittstelle 30 bzw. der Anschlussbereiche 32, 34, 36 in Zuordnung zu jedem Anschlussbereich 32, 34, 36 ein Energiespeicher-Aufnahmebereich 42, 44, 46 jeweils mit einer Energiespeicher-Fixierungsanordnung 48, 50, 52 vorgesehen. Die Energiespeicher-Aufnahmebereiche 42, 44, 46 können in Abstimmung auf die darin anzuordnenden Austausch-Energiespeicher 38, 40 so geformt sein, dass sie beispielsweise durch Formschluss eine definierte Positionierung der Energiespeicher 38, 40 vorgeben, in welcher Positionierung die Energiespeicher 38, 40 durch die jeweils zugeordnete Energiespeicher-Fixieranordnung 48, 50, 52 beispielsweise durch Klemmen oder Einspannen gehalten werden. Beispielsweise können die Energiespeicher-Fixieranordnungen 48, 50, 52 Schnellspannorgane oder Schraubbolzen aufweisen, die zum Fixieren eines jeweiligen Austausch-Energiespeichers 38, 40 angezogen werden können.

Die Ansteuereinheit 24 ist dazu ausgebildet, den Austausch elektrischer Energie zwischen den an die Schnittstelle 30 angeschlossenen Austausch-Energiespeichern 38, 40 und dem wenigstens einen Elektromotor 18 zu steuern bzw. zu regeln. Auf diese Art und Weise kann die in den Austausch-Energiespeichern 38, 40 gespeicherte Energie genutzt werden, um zusätzlich zu der im fahrzeugfesten Energiespeicher 22 gespeicherten Energie Energie für den Betrieb des wenigstens einen Elektromotors 18 und gegebenenfalls anderer Verbraucher elektrischer Energie im Fahrzeug 10 bereitzustellen. Die Ansteuereinheit 24 ist dazu ausgebildet, im Schubbetrieb durch den als Generator arbeitenden Elektromotor 18 bereitgestellte elektrische Energie zu dem bzw. den an die Schnittstelle 30 angeschlossenen Austausch-Energiespeichern 38, 40 zu leiten, um gegebenenfalls auch diese wieder aufzuladen. Hier sind verschiedene Ladestrategien möglich. So ist erfindungsgemäß die Ansteuereinheit 24 dazu eingerichtet, dem Aufladen des fahrzeugfesten Energiespeichers 22 Präferenz zu geben, so dass im Ladebetrieb zunächst dafür gesorgt wird, dass der fahrzeugfeste Energiespeicher 22 geladen ist bzw. geladen wird, bevor dazu übergegangen wird, einen oder mehrere Austausch-Energiespeicher 38, 40 zu laden. Auch für das Ausnutzen der in den verschiedenen Energiespeichern 22, 38, 40 gespeicherten Energie können verschiedene Strategien gewählt werden. So wird erfindungsgemäß dem Entladen der Austausch-Energiespeicher 38, 40 Präferenz gegeben, so dass im Zugbetrieb zunächst die Austausch-Energiespeicher 38, 40 entladen werden und erst dann, wenn diese nicht mehr zur Versorgung des wenigstens einen Elektromotors 18 bzw. weiterer Verbraucher im Fahrzeug 10 genutzt werden können, auch auf die im fahrzeugfesten Energiespeicher 22 gespeicherte Energie zugegriffen wird. Sind mehrere Austausch-Energiespeicher 38, 40 an die Schnittstelle 30 angeschlossen, werden diese sequenziell entladen, so dass ein bereits entladener und für die Versorgung des wenigstens einen Elektromotors 18 nicht mehr nutzbarer Austausch-Energiespeicher durch einen aufgeladenen Austausch-Energiespeicher ersetzt werden kann, während ein noch aufgeladener bzw. nicht vollständig entladener Austausch-Energiespeicher zunächst noch im Fahrzeug verbleiben kann. Um dies zu ermöglichen, kann die Ansteuereinheit 24 dazu ausgebildet sein, den Ladezustand der an die Schnittstelle 30 angeschlossenen Austausch-Energiespeicher 38, 40 zu erfassen und entsprechend dem erfassten Ladezustand die einzelnen Austausch-Energiespeicher 38, 40 zeitlich sequenziell mit dem wenigstens einen Elektromotor 18 zu koppeln, um dementsprechend die Austausch-Energiespeicher 38, 40 nacheinander zu entladen.

Bei dem erfindungsgemäß aufgebauten Fahrzeug 10 ist die Möglichkeit geschaffen, die Reichweite desselben an den vorhandenen Bedarf anzupassen. Wird das Fahrzeug 10 beispielsweise in einem normal üblichen Betrieb genutzt, in welchem davon auszugehen ist, dass die tägliche Fahrstrecke eine durch die im fahrzeugfesten Energiespeicher 22 gespeicherte Energie abgedeckte Reichweite nicht übersteigt, kann auf das Vorsehen zusätzlicher Austausch-Energiespeicher verzichtet werden. Übersteigt der Bedarf die im fahrzeugfesten Energiespeicher 22 gespeicherte Energie, können, wiederum abhängig vom tatsächlich vorhandenen Bedarf, ein oder mehrere Austausch-Energiespeicher 38, 40 an die Schnittstelle 30 angeschlossen werden. Da im allgemeinen die Speicherkapazität dieser Austausch-Energiespeicher 38, 40 bekannt ist, ist für einen Nutzer eines so aufgebauten Fahrzeugs gut erkennbar, wie viele Austausch-Energiespeicher an die Schnittstelle 30 anzuschließen sind, um den vorhandenen Bedarf abdecken zu können.

Für den Betrieb eines erfindungsgemäß aufgebauten Fahrzeugs 10 kann beispielsweise ein Versorgungssystem aufgebaut werden, bei welchem aufgeladene Austausch-Energiespeicher beispielsweise an Tank- oder Raststationen oder speziell dafür vorgesehenen Einrichtungen bereitgehalten werden. Ähnlich wie beim Auftanken brennstoffbetriebener Fahrzeuge kann bei entsprechendem Bedarf der Nutzer eines derartigen Fahrzeugs an einer derartigen Station bzw. Einrichtung einen entladenen Austausch-Energiespeicher gegen einen aufgeladenen Austausch-Energiespeicher austauschen und somit die Fahrt unmittelbar und ohne der Notwendigkeit, eine Ladezeitdauer abwarten zu müssen, fortsetzen. Hierzu kann die Ansteuereinheit 24 dazu ausgebildet sein, dem Nutzer eines so aufgebauten Fahrzeugs Information bereitzustellen, beispielsweise anzuzeigen, welche den Ladezustand nicht nur des fahrzeugfesten Energiespeichers 22 wiedergibt, sondern auch den Ladezustand jedes an die Schnittstelle 30 angeschlossenen Austausch-Energiespeichers 38, 40. Der Nutzer erkennt dann, welcher der Austausch-Energiespeicher 38, 40 bereits entladen ist und erforderlichenfalls gegen einen aufgeladenen Austausch-Energiespeicher ausgetauscht werden muss. Auch bei im Verlaufe einer Fahrt erst erkanntem Bedarf kann der Nutzer eines so aufgebauten Fahrzeugs eine derartige Station bzw. Einrichtung ansteuern, um dort einen oder mehrere Austausch-Energiespeicher aufzunehmen. Grundsätzlich können die Nutzer derartiger Fahrzeuge auch Austausch-Energiespeicher bevorraten, um erforderlichenfalls bei Fahrtantritt einen oder mehrere Austausch-Energiespeicher im Fahrzeug unterzubringen.

Ferner ist darauf hinzuweisen, dass derartige Austausch-Energiespeicher auch in anderen Bereichen eines Fahrzeugs untergebracht werden können. Insbesondere ist es möglich, Austausch-Energiespeicher auch in einem Bereich außerhalb des Fahrzeugs, zum Beispiel in einem Heckträger oder einer Dachbox, unterzubringen. Auch die Unterbringung auf dem Kofferraum bzw. dem Kofferraumdeckel oder in einem Anhänger ist möglich. Grundsätzlich ist es auch möglich, Austausch-Energiespeicher auf verschiedene Aufnahmeorte eines Fahrzeugs zu verteilen, also beispielsweise einen Teil der Austausch-Energiespeicher in einem Kofferraum oder einem Laderaum eines Fahrzeugs unterzubringen und einen anderen Teil der Austausch-Energiespeicher in einem anderen Bereich eines Fahrzeugs, beispielsweise in einer Dachbox oder insbesondere bei Lastkraftwagen in einem Anhänger unterzubringen. Es ist dabei selbstverständlich, dass an derartigen an einem Fahrzeug oder einem damit zu koppelnden Anhänger vorgesehenen Bereichen, in welchen Austausch-Energiespeicher untergebracht werden sollen, die vorangehend erläuterten Vorkehrungen einerseits zur Bereitstellung eines elektrischen Anschlusses und andererseits für eine stabile mechanische Anbindung vorzusehen sind. Alternativ ist es möglich, dass insbesondere bei Unterbringung außerhalb eines Fahrzeuginnenraums oder Laderaums die elektrische Anbindung an einen im Inneren des Fahrzeugs vorgesehenen Anschlussbereich durch ein Anschlusskabel erfolgt.

## Patentansprüche

1. Elektromotorisch angetriebenes Fahrzeug, umfassend eine Antriebseinheit (16) mit wenigstens einem Elektromotor (18), wenigstens einen fahrzeugfesten Energiespeicher (22) und eine Ansteuereinheit (24) zur Beeinflussung des Energieflusses zwischen dem wenigstens einen Elektromotor (18) und dem wenigstens einen fahrzeugfesten Energiespeicher (24), ferner umfassend eine Schnittstelle (30) mit einer Mehrzahl von Anschlussbereichen (32, 34, 36) für jeweils einen Austausch-Energiespeicher (38, 40), wobei die Ansteuereinheit (24) zur Beeinflussung des Energieflusses zwischen dem wenigstens einen Elektromotor (18) und jedem an einen Anschlussbereich (32, 34, 36) der Schnittstelle (30) angeschlossenen Austausch-Energiespeicher (38, 40) ausgebildet ist,
**dadurch gekennzeichnet,**
**dass** die Ansteuereinheit (24) dazu ausgebildet ist, dann, wenn mehrere Austausch-Energiespeicher (38, 40) an die Schnittstelle (30) angeschlossen sind, den Energiefluss zwischen den Austausch-Energiespeichern (38, 40) und dem wenigstens einen Elektromotor (18) derart zu beeinflussen, dass die Austausch-Energiespeicher (38, 40) sequenziell entladen werden,
**dass** die Ansteuereinheit (24) dazu ausgebildet ist, den Energiefluss zwischen dem fahrzeugfesten Energiespeicher (22) sowie den Austausch-Energiespeichern (38,40) und dem wenigstens einen Elektromotor (18) im Zugbetrieb des Fahrzeugs derart zu beeinflussen, dass zunächst jeder an die Schnittstelle (30) angeschlossene Austausch-Energiespeicher (38, 40) entladen wird und erst dann, wenn jeder an die Schnittstelle (30) angeschlossene Austausch-Energiespeicher (38, 40) nicht mehr zur Versorgung des wenigstens einen Elektromotors (18) genutzt werden kann, auf den fahrzeugfesten Energiespeicher (22) zugegriffen wird, und
**dass** die Ansteuereinheit (24) dazu ausgebildet ist, den Energiefluss zwischen dem wenigstens einen Elektromotor (18) und dem fahrzeugfesten Energiespeicher (22) sowie den Austausch-Energiespeichern (38,40) im Schubbetrieb des Fahrzeugs derart zu beeinflussen, dass zunächst der fahrzeugfeste Energiespeicher (22) geladen wird, bevor einer oder mehrere Austausch-Energiespeicher (38, 34) geladen werden.

2. Fahrzeug nach Anspruch 1, **dadurch gekennzeichnet, dass** wenigstens ein Anschlussbereich (32, 34, 36) in einem Laderaum (28) oder/und an einem Heckträger oder/und in einer Dachbox oder/und auf einem Kofferraumdeckel oder/und an einem Anhänger vorgesehen ist.

3. Fahrzeug nach einem der vorangehenden Ansprüche, **dadurch gekennzeichnet, dass** in Zuordnung zu jedem Anschlussbereich (32, 34, 36) eine Energiespeicher-Fixieranordnung (42, 44, 46) vorgesehen ist.

4. Fahrzeug nach einem der vorangehenden Ansprüche, **dadurch gekennzeichnet, dass** wenigstens eine Energiespeicher-Fixieranordnung (42, 44, 46) in einem Laderaum (28) oder/und an einem Heckträger oder/und in einer Dachbox oder/und auf einem Kofferraumdeckel oder/und an einem Anhänger vorgesehen ist.

5. Fahrzeug nach einem der vorangehenden Ansprüche, **dadurch gekennzeichnet, dass** die Ansteuereinheit (24) dazu ausgebildet ist, Information über den Ladezustand jedes an die Schnittstelle (30) angeschlossenen Austausch-Energiespeichers (38, 40) bereitzustellen.

6. Fahrzeug nach einem der vorangehenden Ansprüche, **dadurch gekennzeichnet, dass** die Antriebseinheit (16) eine Brennkraftmaschine (20) umfasst.

## Claims

1. Vehicle driven by an electric motor, comprising a drive unit (16) with at least one electric motor (18), at least one energy storage device permanently installed in the vehicle (22) and an actuating unit (24) for influencing the flow of energy between the at least one electric motor (18) and the at least one energy storage device permanently installed in the vehicle (24), further comprising an interface (30) with a plurality of terminal areas (32, 34, 36) for one replacement energy storage device (38, 40) respectively, wherein the actuating unit (24) is configured to influence the flow of energy between the at least one electric motor (18) and each replacement energy storage device (38, 40) connected to a terminal area (32, 34, 36) of the interface (30),
**characterized in that**
the actuating unit (24) is configured to influence the flow of energy between the replacement energy storage devices (38, 40) and the at least one electric motor (18) when several replacement energy storage devices (38, 40) are connected to the interface (30) such that the replacement energy storage devices (38, 40) are run down sequentially,
the actuating unit (24) is configured to influence the flow of energy between the energy storage device permanently installed in the vehicle (22) and the replacement energy storage devices (38, 40) and the at least one electric motor (18) during traction operation of the vehicle such that each replacement energy storage device (38, 40) connected to the interface (30) is run down first, and the energy storage device permanently installed in the vehicle (22) is not used until the moment where each of the replacement energy storage devices (38, 40) connected to the interface (30) can no longer be used for energy supply to the at least one electric motor (18), and that the actuating unit (24) is configured to influence the flow of energy between the at least one electric motor (18) and the energy storage device permanently installed in the vehicle (22) as well as the replacement energy storage devices (38, 40) during propulsion operation of the vehicle such that the energy storage device permanently installed in the vehicle (22) is charged before one or more of the replacement energy storage devices (38, 40) are charged.

2. Vehicle in accordance with claim 1, **characterized in that** at least one terminal area (32, 34, 36) is provided in a cargo space (28) or/and on a rear carrier or/and in a roof box or/and on a trunk lid or/and on a trailer.

3. Vehicle in accordance with one of the preceding claims, **characterized in that** an energy storage device fixing device (42, 44, 46) is provided in association with each terminal area (32, 34, 36).

4. Vehicle in accordance with one of the preceding claims, **characterized in that** at least one energy storage device fixing device (42, 44, 46) is provided in a cargo space (28) or/and on a rear carrier or/and in a roof box or/and on a trunk lid or/and on a trailer.

5. Vehicle in accordance with one of the preceding claims, **characterized in that** the actuating unit (24) is configured to provide information about the state of charge of each replacement energy storage device (38, 40) connected to the interface (30).

6. Vehicle in accordance with one of the preceding claims, **characterized in that** the drive unit (16) comprises an internal combustion engine (20).

## Revendications

1. Véhicule entraîné par un moteur électrique, comprenant une unité d'entraînement (16) avec au moins un moteur électrique (18), au moins un accumulateur d'énergie installé de manière fixe dans le véhicule (22) et une unité d'actionnement (24) pour influencer le flux d'énergie entre ledit au moins un moteur électrique (18) et ledit au moins un accumulateur d'énergie installé de manière fixe dans le véhicule (24), comprenant en outre une interface (30) avec une pluralité de zones terminales (32, 34, 36) pour un dispositif de stockage d'énergie de remplacement (38, 40) respectif, dans lequel l'unité d'actionnement (24) est configurée pour influencer le flux d'énergie entre ledit au moins un moteur électrique (18) et chaque dispositif de stockage d'énergie de remplacement (38, 40) connecté à une zone terminale (32, 34, 36) de l'interface (30),
**caractérisé en ce que**
l'unité d'actionnement (24) est configurée pour influencer le flux d'énergie entre les dispositifs de stockage d'énergie de remplacement (38, 40) et ledit au moins un moteur électrique (18) lorsque plusieurs dispositifs de stockage d'énergie de remplacement (38, 40) sont connectés à l'interface (30) de telle sorte que les dispositifs de stockage d'énergie de remplacement (38, 40) sont déchargés de manière séquentielle,
l'unité d'actionnement (24) est configurée pour influencer le flux d'énergie entre le dispositif de stockage d'énergie installé de manière permanente dans le véhicule (22) et les dispositifs de stockage d'énergie de remplacement (38, 40) et ledit au moins un moteur électrique (18) pendant le fonctionnement en traction du véhicule de telle sorte que chaque dispositif de stockage d'énergie de remplacement (38, 40) connecté à l'interface (30) est d'abord déchargé, et le dispositif de stockage d'énergie installé de manière permanente dans le véhicule (22) n'est pas utilisé jusqu'au moment où chacun des dispositifs de stockage d'énergie de remplacement (38, 40) connecté à l'interface (30) ne peut plus être utilisé pour l'alimentation en énergie dudit au moins un moteur électrique (18), et que l'unité d'actionnement (24) est configurée pour influencer le flux d'énergie entre ledit au moins un moteur électrique (18) et le dispositif de stockage d'énergie installé de façon permanente dans le véhicule (22) ainsi que les dispositifs de stockage d'énergie de remplacement (38, 40) pendant l'opération de propulsion du véhicule de telle sorte que le dispositif de stockage d'énergie installé de façon permanente dans le véhicule (22) est chargé avant que un ou plusieurs dispositifs de stockage d'énergie de remplacement (38, 40) sont chargés.

2. Véhicule selon la revendication 1, **caractérisé en ce qu'**au moins une zone terminale (32, 34, 36) est prévue dans un espace de chargement (28) ou/et sur un porteur arrière ou/et dans un coffre de toit ou/et sur un couvercle de coffre ou/et sur une remorque.

3. Véhicule selon l'une des revendications précédentes, **caractérisé en ce qu'**un dispositif de fixation de dispositif de stockage d'énergie (42, 44, 46) est prévu en association avec chaque zone terminale (32, 34, 36).

4. Véhicule selon l'une des revendications précédentes, **caractérisé en ce qu'**au moins un dispositif de fixation de dispositif de stockage d'énergie (42, 44, 46) est prévu dans un espace de chargement (28) et/ou sur un porteur arrière et/ou dans un coffre de toit et/ou sur un couvercle de coffre et/ou sur une remorque.

5. Véhicule selon l'une des revendications précédentes, **caractérisé en ce que** l'unité d'actionnement (24) est configurée pour fournir des informations sur l'état de charge de chaque dispositif de stockage d'énergie de remplacement (38, 40) connecté à l'interface (30).

6. Véhicule selon l'une des revendications précédentes, **caractérisé en ce que** l'unité d'entraînement (16) comprend un moteur à combustion interne (20).
